# EUROPEAN PATENT APPLICATION

(11) **EP 0 802 103 A2**
(43) Date of publication of application: **22.10.1997**
(21) Application number: 97610014.9
(22) Date of filing: 16.04.1997
(51) Int. Cl.: B62B 5/04

(54) **Retractable support foot especially for trolley, mail freight container or similar transport devices provided with wheels**

(30) Priority: 16.04.1996 DK 13000/96 U
(71) Applicant: Fabriken Asbro ApS, 6715 Esbjerg N (DK)
(72) Inventor: Magard-Hansen, Ove, 6715 Esbjerg N. (DK)
(74) Representative: Pedersen, Soeren Skovgaard

(57) **Abstract**

More particular, the support foot consists of an upper part (1) that is mounted in a fixed position on the underside of the transport device, and one in the upper part by means of a spring device (6) retractable lower part (2), that at its lower end is provided with a frictionally stable brake shoe (8,9). For activation - i.e. ejection - of the support foot it is provided with a toggle-joint mechanism (3) having a dual stabile retain function. The brake or support foot is operated by foot and the brake activation takes place by pressing on a purposely provided brake activation pedal (4) that influences the shiftable lower-most part of the support foot by the toggle-joint mechanism.

The novel features of this invention is that the support foot can be more compactly built than it was possible earlier. Thereby, the built-in height can be reduced from app. 200 mm to app. 140 mm whilst maintaining the braking area (the interval of braking) at app. 40 mm. The reduced built-in height is importance to the loading capacity.

## Description

### The area of use of the invention

This invention relates to a retractable brake or support foot for mail freight containers or similar transport devices of the kind provided with own travelling wheels. In more specific terms, the support foot consists of an upper part that is mounted in a fixed position on the underside of the transport device, and one in the upper part by means of a spring device retractable lower part, that at its lower end is provided with a frictionally stable brake shoe (machine shoe) for support engagement against the underlying surface. For activation - i.e. ejection - of the support foot it is provided with a toggle-joint mechanism having a dual stabile retain function. The brake or support foot is operated by foot and the brake activation takes place by pressing on a purposely provided brake activation pedal that influences the shiftable lowermost part of the support foot by the toggle-joint mechanism.

### Prior art

A brake or support foot of the above mentioned kind is known from the US Patent Specification No. 2 712 366. The US patent No. 3 554 328 also relates to a brake or support foot of a kind having a return spring built in, however in this specification without a toggle-joint mechanism. Both patent specifications relate to designs having a ground clearance under the transport device, under which they are mounted, of approximately 200 mm or more. The design of the guiding, release and spring mechanisms of the individual parts do not allow for a more compact structure that could result in a desired lower ground clearance.

### The technical problem to be solved

In general, transportation on lorries or train carriages of several types of trolley-like containers and transport trolleys having own with travelling wheels makes it difficult to have these transport devices braked and/or locked in such a way that the units do not move during transportation. For such a purpose, retractable brakes or support feet such as described are used. They are activated when the transport units are wheeled into position in the lorry or train carriage. In the activated position wheels of the transportation unit are thus lifted off the underlying surface and the unit rests on the friction stabile shoe of the brake or support foot or feet.

Known brake or support feet as described have, however, a ground clearance (built-in height) which very often surpasses considerably the ground clearance of the transport wheel, which is why containers or transport trolleys need to be constructed with an unnecessary high positioned floor space. This of course conflicts with the loading capacity. Today, for the use of modern container types, there is a need for brake or support feet with a ground clearance or built-in height of app. 140 mm and a braking interval (braking height) of app. 40 mm. The present invention aims at meeting this need.

### The new technique

The novelty of the invention is that the uppermost and lowermost part of the support foot mainly comprises two in each other telescoping profile tube mounted with a tension spring inserted between these tubes inside them, thus this tension spring is providing for the influence of the shiftable lowermost profile tube member with a spring force that is directed upwards in relation to the uppermost fixed profile tube member so that the retraction of the support foot can be effectuated exclusively by this spring force.

In addition, the invention relates to the fact that this toggle-joint mechanism is placed on the outside of the profile tubes with the first toggle arm being suspended around a pivot point at the upper part on the fixed profile tube and the other toggle arm being suspended around a pivot point at the lower part of the shiftable profile tube member in such a way that the two toggle arms are connected in a hinge-point approximately in the middle between the upper and the lower pivot points so that the toggle arms passes a centre position where the three hinge points are in line, when the support foot is shifted from a lowered (braking) position to a retracted position and visa verse, whereby the toggle-joint mechanism in combination with the internal tension spring provides the dual stabile retain function.

### The technical effect

By applying the above-mentioned new technique in connection with the known technique the brake foot can be more compactly built and thus the built-in height can be reduced to app. 140 mm at the same time as the braking area (the braking interval) is maintained at app. 40 mm. The reduced building length is especially achieved by the mentioned placement of the tension spring inside the two telescoping profile tubes at the same time as the toggle-joint mechanism and the release lever are placed on the outside in relation to the tubes so that construction length is saved. The preferred embodiments of the invention are stated in the dependent claims 2 to 9.

The invention and especially the preferred embodiment and details thereof are explained in further details in the following with reference to the figures of the drawing.

### List of figures

- Fig. 1: shows a retractable brake or support foot according to the invention, viewed from the side in an activated brake position (lowered position),
- fig. 2: shows the same however in a centremost dead centre position, in which the toggle-joint mechanism of the support foot is being released by the effect of the release lever,
- fig. 3: shows a brake/support foot shown in a retractable position, and
- fig. 4: shows a brake/support foot in a vertical out-away view through the centre line of the profile tubes.

### Embodiments

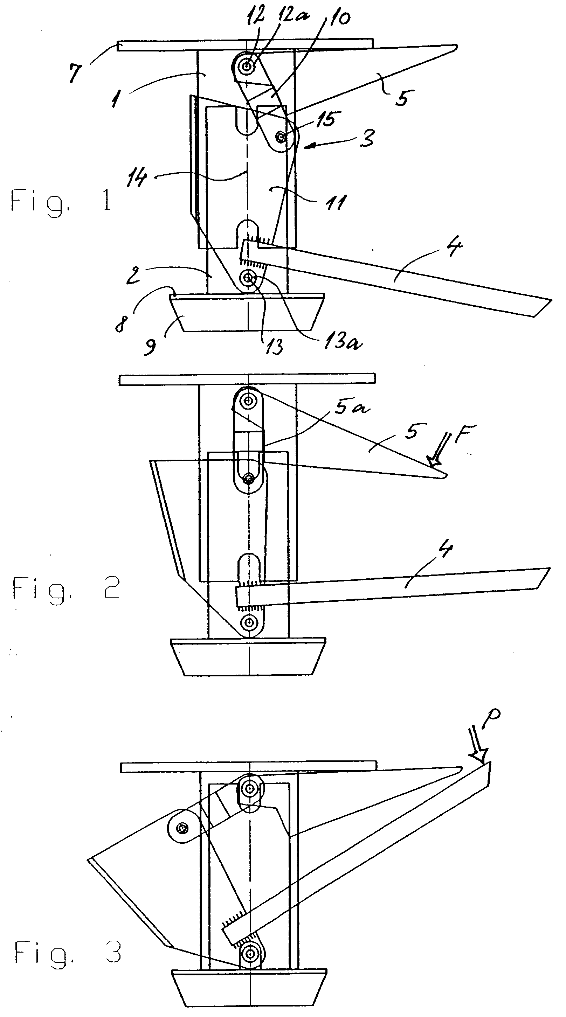

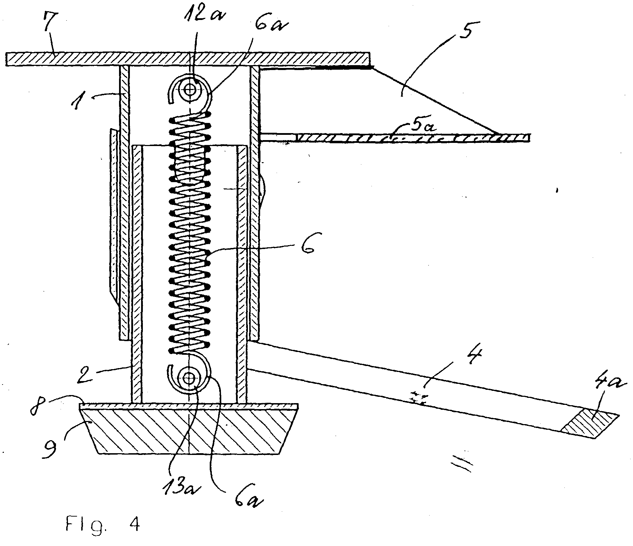

In the embodiment described in fig. 1-3 the support foot essentially consists of an uppermost profile tube member 1, an in this telescoping inserted lowermost profile tube member 2, a toggle-joint mechanism 3 with brake activating pedal 4 and release lever 5. Inside the profile tube members 1 and 2 a tension spring 6 is inserted, compare the cut-away view in fig. 4.

The two profile tube members 1 and 2 can for instance have a square profile so that the tubes are turn-prove in relation to each other. The upper tube member is mounted to a mounting plate 7 which is provided with bolt holes, not shown in the figures. The lower tube member 2 is correspondingly at its lower free end provided with a mounted foot plate 8 at the underside of which is mounted a brake improving and vibration damping friction padding or a padding 9.

The toggle-joint mechanism 3 is a symmetrical double construction with a set of toggle-joints placed outside on each side of the profile tube members 1, 2. Each set of toggle-joints consists of an upper joint member 10 and a lower joint member 11. The upper joint member is a bearing in a pivot point 12 uppermost at the steady profile tube member 1 and the lower joint member 11 is correspondingly a bearing in a pivot point 13 lowermost on the shiftable lower tube member 2. The pivot points 12 and 13 are placed in the centre plane 14 of the profile tube members. The two joint members 10 and 11 have a common pivot point 15 about half way between the uppermost and lowermost pivot point 12, 13. The uppermost joint members 10 are joggled in the middle and thus provides space for the release lever 5 which is a bearing in the same pivot points as the joint members 10. The two lowermost joint members 11 are produced coherently of a punched out and in a U-form bent piece of plate.

The pivot points 12 and 13 consist of transverse taps 12a and 13a which are inserted through thereto produced transverse drillings in the profile tube members 1 and 2. The taps 12a and 13a in this way form pivot points on both sides of the support foot i.e. as regards the set of toggle-joints on each side of the profile tubes and these taps inside in the profile tube members serve as fixation for the tension spring 6 as the connection hooks 6a of the spring surround the taps, compare fig. 4. The taps 12a and 13a consist of tube members which after having been mounted are suitably drifted.

The uppermost tap 12a provides as mentioned also a bearing for the release lever 5 which consists of a punched out and bent piece of plate in a U-shape bent form. The central section 5a of the lever (see fig. 4) forms a plane pressure surface which makes it possible to press the release lever downwards with a pressure F of the foot. The two side members 5b of the U-shaped bent form hereby influence the profiled bendings of the uppermost joint member 10, to which effect the joggle-joint mechanism 3 is brought above the dead centre position (the centre position fig. 2). The tension spring 6 will hereafter pull the shiftable lower tube member 2 up into the uppermost tube member 1 so that the brake/support foot is released from the underlying surface. The retractable free position of the brake/support foot is shown in fig. 3. The release lever 5 is provided with a return spring (not shown) which consists of a needle spring mounted on the outside in connection with the tap 12a. The return spring has the purpose of maintaining the release lever 5 up in the horizontal starting position as shown in fig. 1 and 3.

The two sets of toggle-joint 3 are interconnected by use of the brake activation pedal 4. This has a U-shaped bent form and is welded to the outsides of the two lowermost arms on the joint member 11. The centre piece of the u-shaped bent form lla (fig. 4) serves as a foot push when the brake or support foot is brake activated. When influencing the brake activation pedal 4 with a suitable pressure P downwards with the foot, the shiftable tube member 2 is forced downwards under the influence of the toggle-joint mechanism and against the effect of the tension spring 6. When the toggle-joint mechanism has passed the centre position (fig. 2), the mechanism will be self-locking in the new brake activated position (fig. 1).

The present invention is not limited to the embodiment shown in the figure and to the above-mentioned description. Other material combinations, other detail embodiments and other constructive solutions to the individual elements of the brake or support foot are conceivable within the scope of this invention just as the use of the brake or support foot can be expanded into other areas than the above-mentioned.

## Claims

1. A retractable brake or support foot especially for a trolley, mail freight container or similar transport devices having wheels, and in particular of the kind where the support foot comprises an upper part (1, 7), that is mounted in a fixed position on the underside of the transport device, and one in the upper part by means of a spring device (6) retractable lower part (2), that at its lower end is provided with a frictionally stable brake shoe (machine shoe 8,9) for support engagement against the underlying surface, and where for the activation of the support foot a toggle-joint mechanism with a dual stabile retain function is provided, that can be operated by foot through a for this purpose adapted pedal (4), **characterised** in that
- the upper and the lower part of the support foot comprising two in each other telescoping profiled tubes (1, 2) provided with a tension spring (6) inserted between these tubes inside in them, the tension spring is provided for influencing the shiftable lowermost profile tube member (2) with a spring force that is directed upwards in relation to the uppermost fixed profile tube member (1) so that the retraction of the support foot can be effectuated exclusively by this spring force, and
- that this toggle-joint mechanism (3) is on the outside of the profile tubes (1, 2) with the first toggle arm (10) being suspended around a pivot point (12) at the upper part on the fixed profile tube (1) and the other toggle arm (11) being suspended around a pivot point (13) at the lower part of the shiftable profile tube member (2) in such a way that the two toggle arms (10, 11) are connected in a hinge-point (15) approximately in the middle between the upper and the lower pivot points so that the toggle arms (10, 11) passes a centre position where the three hinge points (12, 13, 15) are in line, when the support foot is shifted from a lowered (braking) position to a retracted position and visa verse, whereby the toggle-joint mechanism in combination with the internal tension spring (6) provides the dual stabile retain function.

2. A retractable brake or support foot according to claim 1, **characterised** in that the support foot further is provided with a release lever (5) that is supported independent of the toggle-joint mechanism (3) and which operates by applying a sidewardly directed pressure on the uppermost toggle arm (10) of the toggle-joint, as such an application by the release lever means that the hinged joint is forced to pass the dead centre position in direction towards the position where the support foot is retracted.

3. A retractable brake or support foot according to claim 1 and 2, **characterised** in that the toggle joint mechanism is a symmetric double construction having an identical set of toggle-joints (3) symmetrically disposed on each side of the profile tubes (1, 2) and that the toggle-joints at the two sides are connected by a U-shaped bent brake activation pedal (4) that is welded or bolted to the two lowermost arms of the toggle arms 11.

4. A retractable brake or support foot according to claims 1-3, **characterised** in that the release lever (5) also has a U-shaped bent form and is supported around the same two pivot points (12) as the two uppermost toggle arms, and that the release lever is arranged at the front of the support foot on the same side as the brake activation pedal (4) and substantively inside the extension of said pedal, so that the lever can be operated (activated) independently of the brake pedal and visa versa.

5. A retractable brake or support foot according to claim 4, **characterised** in that the release lever has two protruding impact surfaces (5b) that operates directly in against the two uppermost toggle arms (10), so that a pressure on the lever forces the toggle-joint mechanism to pass the dead centre position, and that the release lever is provided with its own return spring.

6. A retractable brake or support foot according to claim 1, **characterised** in that the uppermost profile tube member is welded to a horizontal mounting surface (7) that is provided with bolt holes, and that the lower profile tube member is provided with a foot plate (8) which on its underside has mounted a brake improving friction padding (9) or a padding which purpose is vibration damping.

7. A retractable brake or support foot according to claim 3, 4 or 5, **characterised** in that the uppermost and the lowermost hinge-joints (12, 13) for the toggle arms consist of two taps (12a, 13a) that are extending through for this purpose provided crossing apertures in the profile tube members (1, 2), and these taps inside in the profile tube members serve as fixation for the tension spring (6) as the connection hooks (6a) of the spring surround the taps.

8. A retractable brake or support foot according to claim 7, **characterised** in that the taps (12a, 13a) are centrally placed in the symmetrical centre line (14) of the profile tube members.

9. A retractable brake or support foot according to claim 1 or 8, **characterised** in that the taps are made of tube members that are drifted or in any other manner provided with a collar rim after the mounting of the profile tube members and the other parts respectively that form part of the mechanism.
